# FASCICULE DE BREVET EUROPEEN

(11) **EP 4 400 430 B1**
(45) Date de publication et mention de la délivrance du brevet: **02.12.2026**
(21) Numéro de dépôt: 23305054.1
(22) Date de dépôt: 16.01.2023
(51) Int. Cl.: B64G 1/24, G06N 20/00, G06N 3/0442, G06N 3/063, G06N 3/09

(54) **PROCÉDÉ DE PRÉDICTION DE LA TRAJECTOIRE D'UN SATELLITE**
VERFAHREN ZUR VORHERSAGE DER TRAJEKTORIE EINES SATELLITEN
METHOD FOR PREDICTING THE TRAJECTORY OF A SATELLITE

(43) Date de publication de la demande: 17.07.2024
(73) Titulaire: BULL SAS, 78340 Les Clayes-Sous-Bois (FR)
(72) Inventeur: CALMETTES, Pierre, 31400 Toulouse (FR)
(74) Mandataire: Novagraaf Technologies

(56) Documents cités:
- CN-A- 112 580 819
- US-A1- 2021 292 011
- US-A1- 2022 017 239
- US-A1- 2022 058 922
- US-A1- 2022 363 415
- ALY A F ET AL: "Optimization techniques for orbit estimation and determination to control the satellite motion", AEROSPACE CONFERENCE PROCEEDINGS, 2002. IEEE MAR 9-16, 2002, PISCATAWAY, NJ, USA,IEEE, vol. 5, 9 March 2002 (2002-03-09), pages 2231 - 2248, XP010604591, ISBN: 978-0-7803-7231-3
- GE DANTONG ET AL: "Robust learning for collision-free trajectory in space environment with limited a priori information", ACTA ASTRONAUTICA, PERGAMON PRESS, ELMSFORD, GB, vol. 187, 30 June 2021 (2021-06-30), pages 281 - 294, XP086756053, ISSN: 0094-5765, [retrieved on 20210630], DOI: 10.1016/J.ACTAASTRO.2021.06.038
- SONG JIANING ET AL: "Deep learning-based spacecraft relative navigation methods: A survey", ACTA ASTRONAUTICA, PERGAMON PRESS, ELMSFORD, GB, vol. 191, 28 October 2021 (2021-10-28), pages 22 - 40, XP086902613, ISSN: 0094-5765, [retrieved on 20211028], DOI: 10.1016/J.ACTAASTRO.2021.10.025
- ZHANG PENG ET AL: "Asteroid landing via onboard optimal guidance based on bidirectional extreme learning machine", 2016 INTERNATIONAL JOINT CONFERENCE ON NEURAL NETWORKS (IJCNN), IEEE, 24 July 2016 (2016-07-24), pages 609 - 615, XP032992222, DOI: 10.1109/IJCNN.2016.7727256

## Description

### DOMAINE TECHNIQUE DE L'INVENTION

Le domaine technique de l'invention est le domaine spatial et plus particulièrement celui de la prédiction de trajectoires satellitaires.

La présente invention concerne un procédé de prédiction de la trajectoire d'un satellite et plus particulièrement un procédé de prédiction de la trajectoire d'un satellite réalisée à bord du satellite. La présente invention concerne également un procédé de gestion de collisions spatiales impliquant un satellite et un satellite configuré pour prédire sa propre trajectoire.

### ARRIERE-PLAN TECHNOLOGIQUE DE L'INVENTION

Pour éviter à un satellite artificiel d'entrer en collision avec un débris spatial, un corps céleste ou un autre satellite, il est indispensable de prédire sa trajectoire à venir pour pouvoir prévoir et empêcher ces collisions, en déviant le satellite de cette trajectoire le cas échéant.

Actuellement, l'estimation de la trajectoire d'un satellite est réalisée par des stations terrestres, soit à partir de systèmes radar, soit via des modèles de prédiction basés sur la physique, et les consignes de changement de trajectoire sont envoyées au satellite depuis le sol.

Cependant, un tel fonctionnement est insatisfaisant dans le cas où la communication du sol vers le satellite est dégradée voire impossible. En effet, le satellite ne reçoit plus alors aucune consigne de la part du sol, et ne déviera donc pas de sa trajectoire à temps pour éviter la collision.

Le document US2022/058922A1 décrit un système informatique de prédiction de trajectoires orbitales via un modèle physique, s'exécutant au sol, qui utilise un modèle d'apprentissage automatique supervisé pour prédire et corriger les erreurs de ces trajectoires, afin d'améliorer leur précision pour la surveillance de l'espace. Le document US2022/363415A1 concerne un procédé de contrôle des trajectoires d'un essaim de satellites au moyen d'un agent d'apprentissage par renforcement profond, lequel détermine des actions de manœuvre destinées à configurer ou maintenir une formation orbitale à partir d'informations de position et de vitesse des satellites.

Il existe donc un besoin d'une méthode permettant à un satellite artificiel d'éviter des collisions même lorsque que la communication en liaison montante est limitée voire inexistante.

### RESUME DE L'INVENTION

L'invention offre une solution aux problèmes évoqués précédemment, en permettant à un satellite d'éviter des collisions sans qu'une station au sol n'ait besoin de lui envoyer de consignes de déviation de trajectoire.

Un premier aspect de l'invention concerne un procédé de prédiction de la trajectoire d'un satellite donné selon la revendication 1.

Grâce à l'invention, la trajectoire d'un satellite est estimée par le satellite lui-même, embarquant un circuit intégré intégrant un algorithme d'apprentissage automatique préalablement entraîné au sol pour prédire la trajectoire d'un satellite, à partir d'un jeu de données du satellite accessible au satellite sans avoir à communiquer avec une station terrestre.

Ainsi, l'estimation est précise, n'utilise que peu de puissance de calcul et de taille mémoire classiquement réduites dans les satellites, et ne nécessite que peu de données et de matériel, contrairement aux méthodes de l'art antérieur ayant besoin de calculer les forces s'exerçant sur le satellite ou d'une antenne radar pour réaliser l'estimation.

Outre les caractéristiques qui viennent d'être évoquées dans le paragraphe précédent, le procédé selon le premier aspect de l'invention peut présenter une ou plusieurs caractéristiques complémentaires parmi les suivantes.

Selon un mode de réalisation, l'algorithme utilise un réseau de neurones artificiels.

Selon un exemple de réalisation du mode de réalisation précédent, l'algorithme utilise un réseau à mémoire à long et court terme.

Les réseaux à mémoire à long et court terme sont particulièrement précis dans la prédiction de séries temporelles.

Selon un mode de réalisation compatible avec les modes de réalisation précédents, le langage de programmation est Python ou C++.

Selon un mode de réalisation compatible avec les modes de réalisation précédents, le circuit intégré est un circuit intégré propre à une application ou un circuit intégré programmable.

Selon un mode de réalisation compatible avec les modes de réalisation précédents, le langage de description de matériel est VHDL ou Verilog.

Selon un mode de réalisation compatible avec les modes de réalisation précédents, le procédé selon le premier aspect de l'invention comprend en outre une étape d'envoi de la prédiction de trajectoire à une station terrestre.

Un deuxième aspect de l'invention concerne un procédé de gestion de collisions spatiales impliquant un satellite donné, comprenant les étapes du procédé selon le premier aspect de l'invention et :
- une étape de prévision à partir de la prédiction de trajectoire, des éventuelles collisions à venir impliquant le satellite donné ;
- si une collision est prévue, une étape de calcul à partir de la prédiction de trajectoire, d'une consigne de déviation de trajectoire pour le satellite donné.

Ainsi, la prédiction de trajectoire peut être utilisée pour anticiper et empêcher des collisions impliquant le satellite.

Un troisième aspect de l'invention concerne un produit-programme d'ordinateur comprenant des instructions qui, quand le programme est exécuté sur un ordinateur, conduisent celui-ci à mettre en œuvre les étapes d'entraînement et d'intégration du procédé selon le premier ou le deuxième aspect de l'invention.

Un quatrième aspect de l'invention concerne un satellite selon la revendication 10.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique d'un procédé de prédiction selon l'invention.
- La figure 2 est une représentation schématique d'un satellite selon l'invention.
- La figure 3 est un schéma synoptique d'un procédé de gestion selon l'invention.

### DESCRIPTION DETAILLEE

Sauf précision contraire, un même élément apparaissant sur des figures différentes présente une référence unique.

Un premier aspect de l'invention concerne un procédé de prédiction de la trajectoire d'un satellite artificiel.

On entend par « trajectoire d'un satellite artificiel », la courbe décrite par le satellite autour de la Terre ou d'un autre astre.

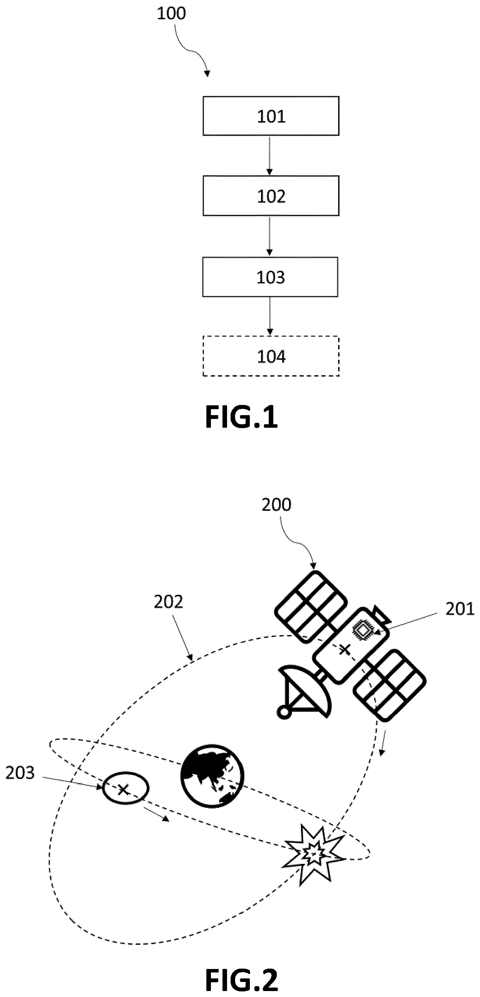

Sur la figure 2 est représenté schématiquement un satellite artificiel 200 décrivant une trajectoire 202 autour de la Terre.

Le procédé 100 de prédiction selon l'invention comporte plusieurs étapes dont l'enchaînement est représenté à la figure 1.

Une première étape 101 du procédé 100 consiste à entraîner un algorithme d'apprentissage automatique, autrement appelé machine learning en anglais, afin de le rendre capable de fournir en sortie, une prédiction de la trajectoire 202 de n'importe quel satellite 200, quand un jeu de données relatives à ce satellite 200 lui est fourni en entrée.

Le jeu de données relatives au satellite 200 comporte des données de position et des données de vitesse du satellite 200 à l'instant de la prédiction ou à un instant précédent l'instant de la prédiction.

La prédiction de la trajectoire 202 comporte des données de position pour une pluralité d'instants consécutifs à l'instant de prédiction.

Les données de position sont par exemple les coordonnées tridimensionnelles de la position et les données de vitesse sont par exemple les composantes tridimensionnelles de la vitesse du satellite 200.

L'étape 101 d'entraînement consiste à mettre à jour les paramètres de l'algorithme d'apprentissage automatique de manière à minimiser l'écart entre la prédiction réalisée par l'algorithme à partir du jeu de données fourni en entrée et la prédiction qu'il devrait réaliser à partir de ce jeu de données.

L'entraînement est réalisé sur une base de données d'entraînement comportant une pluralité de jeux de données d'entraînement. Chaque jeu de données d'entraînement comprend au moins une donnée relative à un satellite 200 d'entraînement.

Un jeu de données d'entraînement comporte le même type de données que le jeu de données relatives au satellite 200 précédemment décrit.

L'entraînement est de type supervisé. Dans ce cas, la base de données d'entraînement comporte en outre, pour chaque jeu de données d'entraînement, la trajectoire 202 du satellite 200 d'entraînement correspondant au jeu de données d'entraînement.

La première étape 101 consiste alors à mettre à jour les paramètres de l'algorithme d'apprentissage automatique de manière à minimiser l'écart entre la trajectoire 202 prédite par l'algorithme à partir de chaque jeu de données d'entraînement et la trajectoire 202 associée au jeu de données d'entraînement dans la base de données d'entraînement.

En pratique, la base de données d'entraînement comporte pour au moins un satellite 200 d'entraînement, un ensemble de jeux de données d'entraînement comportant une pluralité de jeux de données correspondant à des données de position et de vitesse du satellite 200 d'entraînement pris à intervalle régulier pendant une période définie.

Pour un jeu de données d'entraînement donné de l'ensemble de jeux de données d'entraînement, la trajectoire 202 associée correspond alors aux données de position du satellite 200 d'entraînement pris aux instants suivants l'instant associé au jeu de données d'entraînement donné.

Une telle base de données d'entraînement a par exemple été rendue accessible au public suite à la compétition IDAO 2020 (pour « International Data Analytics Olympiad 2020 »).

L'algorithme d'apprentissage automatique utilise par exemple un réseau de neurones artificiels, et plus particulièrement un réseau à mémoire à long et court terme, autrement appelé Long-Short Term Memory LSTM network en anglais.

Le réseau de neurones artificiels est par exemple capable de fournir à partir d'un jeu de données relatives à un satellite 200, une prédiction de la position et de la vitesse du satellite 200 à un instant suivant.

Une prédiction de la trajectoire 202 du satellite 200 peut alors être obtenue en fournissant en entrée du réseau de neurones artificiels, initialement le jeu de données relatives au satellite 200, puis les prédictions successives fournies en sortie par le réseau de neurones artificiels.

L'algorithme d'apprentissage automatique est codé dans un langage de programmation, par exemple Python ou C++, et la première étape 101 est mise en œuvre par un ordinateur comprenant au moins un processeur, qui peut être graphique ou non, par exemple de type CPU (pour « Central Processing Unit » en anglais) ou de type GPU (pour « Graphical Processing Unit » en anglais).

Une deuxième étape 102 du procédé 100 consiste à intégrer l'algorithme d'apprentissage automatique entraîné, c'est-à-dire l'algorithme à l'issue de la première étape 101, sur un circuit intégré 201.

Le circuit intégré 201 peut être un circuit intégré propre à une application, par exemple une carte ASIC (pour « Application-Specific Integrated Circuit » en anglais), ou un circuit intégré programmable, par exemple un FPGA (pour « Field Programmable Gate Array » en anglais).

Pour réaliser l'intégration de l'algorithme d'apprentissage automatique entraîné, le code de l'algorithme en langage de programmation est converti vers un langage de description de matériel.

Le langage de description de matériel est par exemple le langage VHDL ou Verilog.

La deuxième étape 102 est également mise en œuvre par un ordinateur, par exemple en utilisant un logiciel réalisant automatiquement la conversion, tel que l'outil Vivado HLS.

Le circuit intégré 201 intégrant l'algorithme d'apprentissage automatique entraîné, c'est-à-dire le circuit intégré 201 à l'issue de la deuxième étape 102, est ensuite embarqué sur le satellite 200 dont on veut prédire la trajectoire 202, comme représenté sur la figure 2.

Une troisième étape 103 du procédé 100 consiste à prédire la trajectoire 202 du satellite 200.

La prédiction est réalisée par l'algorithme d'apprentissage automatique intégré sur le circuit intégré 201, et donc à bord du satellite 200, à partir d'un jeu de données relatives au satellite 200 tel que décrit précédemment.

Le procédé 100 selon l'invention peut également comporter une quatrième étape 104 optionnelle d'envoi à une station terrestre, de la prédiction de trajectoire 202 obtenue à l'issue de la troisième étape 103, dans le cas où des moyens assurant la communication du satellite 200 vers la Terre sont fonctionnelles.

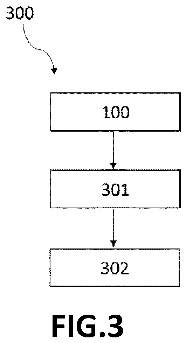

Un deuxième aspect de l'invention concerne un procédé 300 de gestion de collisions spatiales impliquant le satellite 200 artificiel, comportant plusieurs étapes dont l'enchaînement est représenté à la figure 3.

Le procédé 300 de gestion selon l'invention comporte les étapes du procédé 100 de prédiction permettant d'obtenir une prédiction de trajectoire 202 pour le satellite 200, ainsi qu'une première étape 301 et une deuxième étape 302.

La première étape 301 et la deuxième étape 302 du procédé 300 peuvent être réalisées à bord du satellite, ou au sol si la prédiction de trajectoire 202 pour le satellite 200 a été envoyée à une station terrestre, c'est-à-dire si la quatrième étape 104 du procédé 100 a été réalisée.

La première étape 301 du procédé 300 consiste à prévoir d'éventuelles collisions à venir impliquant le satellite 200.

La prédiction est réalisée à partir de la prédiction de trajectoire 202 obtenue pour le satellite 200.

La prédiction peut consister à comparer la trajectoire 202 prédite pour le satellite 200 avec la trajectoire 202 de chaque objet spatial 203 situé dans une zone proche du satellite 200.

Un objet spatial 203 est par exemple un autre satellite 200, un débris spatial ou un corps céleste.

La trajectoire 202 d'un objet spatial 203 situé dans une zone proche du satellite 200 peut être calculée par une station terrestre et éventuellement envoyée au satellite 200, envoyée par un autre satellite 200, ou estimée par le satellite 200 à partir de données de capteurs, telles que des images ou des relevés RADAR.

On considère qu'une collision avec un objet spatial 203 est prévue si pour un instant donné, la position du satellite 200 et la position de l'objet spatial 203 est similaire ou proche.

Sur la figure 2 est représenté un objet spatial 203 en orbite autour de la Terre qui va se retrouver sur la trajectoire du satellite 200.

La deuxième étape 302 du procédé 300 est réalisée si une collision est prévue suite à la première étape 301, et consiste à calculer une consigne de déviation de trajectoire pour le satellite 200.

Le calcul est réalisé à partir de la prédiction de trajectoire 202 obtenue pour le satellite 200.

## Revendications

1. Procédé (100) de prédiction de la trajectoire (202) d'un satellite (200) donné, comprenant:
- une étape (101) d'entraînement d'un algorithme d'apprentissage automatique pour le rendre capable de prédire la trajectoire (202) d'un satellite (200) à partir d'un jeu de données relatives au satellite (200), l'algorithme étant codé dans un langage de programmation, l'entraînement étant supervisé et réalisé à l'aide d'une base de données d'entraînement comportant :
∘ un ensemble de jeux de données d'entraînement, chaque jeu de données d'entraînement comprenant au moins une donnée d'entraînement relative à un satellite (200) d'entraînement, ladite donnée d'entraînement comprenant des données de position et vitesse du satellite (200) associées à un instant associé, et
∘ pour chaque jeu de données d'entraînement, une trajectoire du satellite (200) d'entraînement correspondante, ladite trajectoire correspondant aux données de position du satellite (200) d'entraînement aux instants suivant l'instant associé au jeu de données d'entraînement donné, l'entraînement comprenant une mise à jour des paramètres de l'algorithme d'apprentissage automatique de manière à minimiser un écart entre la trajectoire (202) prédite par l'algorithme d'apprentissage automatique à partir des jeux de données d'entraînement et la trajectoire d'entraînement correspondante ;
- une étape (102) d'intégration de l'algorithme entraîné, sur un circuit intégré (201) destiné à être embarqué sur le satellite (200) donné, par conversion du langage de programmation vers un langage de description de matériel ;
- une étape (103) de prédiction de la trajectoire (202) du satellite (200) donné par l'algorithme intégré, à partir d'un jeu de données relatives au satellite donné (200) comportant des données de position et vitesse du satellite (200) à un instant de la prédiction ou à un instant précédent l'instant de la prédiction, la trajectoire prédite (202) comportant des données de position pour une pluralité d'instants consécutifs à l'instant de prédiction;
les étapes (101, 102) d'entraînement et d'intégration étant réalisées au sol sur un ordinateur comprenant au moins un processeur et l'étape (103) de prédiction étant réalisée à bord du satellite (200) donné embarquant le circuit intégré (201).

2. Procédé (100) selon la revendication 1, dans lequel l'algorithme utilise un réseau de neurones artificiels.

3. Procédé (100) selon la revendication 2, dans lequel l'algorithme utilise un réseau à mémoire à long et court terme.

4. Procédé (100) selon l'une quelconque des revendications précédentes, dans lequel le langage de programmation est Python ou C++.

5. Procédé (100) selon l'une quelconque des revendications précédentes, dans lequel le circuit intégré (201) est un circuit intégré propre à une application ou un circuit intégré programmable.

6. Procédé (100) selon l'une quelconque des revendications précédentes, dans lequel le langage de description de matériel est VHDL ou Verilog.

7. Procédé (100) selon l'une quelconque des revendications précédentes, comprenant en outre une étape (104) d'envoi de la prédiction de trajectoire (202) à une station terrestre.

8. Procédé (300) de gestion de collisions spatiales impliquant un satellite (200) donné, comprenant les étapes du procédé (100) selon l'une quelconque des revendications précédentes et :
- une étape (301) de prévision à partir de la prédiction de trajectoire (202), des éventuelles collisions à venir impliquant le satellite (200) donné ;
- si une collision est prévue, une étape (302) de calcul à partir de la prédiction de trajectoire (202), d'une consigne de déviation de trajectoire pour le satellite (200) donné.

9. Produit-programme d'ordinateur comprenant des instructions qui, quand le programme est exécuté sur un ordinateur, conduisent celui-ci à mettre en œuvre les étapes (101, 102) d'entraînement et d'intégration du procédé (100, 300) selon l'une quelconque des revendications précédentes.

10. Satellite (200) sur lequel est embarqué un circuit (201) intégrant un algorithme d'apprentissage automatique entraîné par le procédé selon l'une quelconque des revendications 1 à 8, pour prédire la trajectoire (202) du satellite (200) à partir d'un jeu de données relatives au satellite (200).

## Patentansprüche

1. Verfahren (100) für die Vorhersage der Flugbahn (202) eines gegebenen Satelliten (200), umfassend:
- einen Schritt (101) des Trainierens eines Algorithmus für maschinelles Lernen, um ihn zu befähigen, die Flugbahn (202) eines Satelliten (200) aus einem auf den Satelliten (200) bezogenen Datensatz vorherzusagen, wobei der Algorithmus in einer Programmiersprache codiert ist, wobei das Training überwacht und mittels einer Trainingsdatenbank durchgeführt wird, umfassend:
○ eine Anzahl von Trainingsdatensätzen, wobei jeder Trainingsdatensatz mindestens ein Trainingsdatenelement in Bezug auf einen Trainingssatelliten (200) umfasst, wobei das Trainingsdatenelement Positions- und Geschwindigkeitsdaten des Satelliten (200) umfasst, die einem zugewiesenen Zeitpunkt zugeordnet sind, und
○ für jeden Trainingsdatensatz eine entsprechende Flugbahn des Trainingssatelliten (200), wobei die Flugbahn den Positionsdaten des Trainingssatelliten (200) zu den Zeitpunkten entspricht, die auf den dem gegebenen Trainingsdatensatz zugewiesenen Zeitpunkt folgen, wobei das Training eine Aktualisierung der Parameter des Algorithmus für maschinelles Lernen umfasst, sodass eine Abweichung zwischen der durch den Algorithmus für maschinelles Lernen aus den Trainingsdatensätzen vorhergesagten Flugbahn (202) und der entsprechenden trainierten Flugbahn minimiert wird;
- einen Schritt (102) des Integrierens des trainierten Algorithmus auf einer integrierten Schaltung (201), die dazu bestimmt ist, auf dem gegebenen Satelliten (200) mitgeführt zu werden, durch Umwandeln der Programmiersprache in eine Hardwarebeschreibungssprache;
- einen Schritt (103) des Vorhersagens der Flugbahn (202) des gegebenen Satelliten (200) durch den integrierten Algorithmus, aus einem Datensatz in Bezug auf den gegebenen Satelliten (200), der Positions- und Geschwindigkeitsdaten des Satelliten (200) zu einem Zeitpunkt der Vorhersage oder zu einem dem Vorhersagezeitpunkt vorangehenden Zeitpunkt umfasst, wobei die vorhergesagte Flugbahn (202) Positionsdaten für eine Vielzahl von auf den Vorhersagezeitpunkt folgenden Zeitpunkten umfasst;
wobei die Schritte (101, 102) des Trainierens und des Integrierens auf dem Boden auf einem Computer durchgeführt werden, der mindestens einen Prozessor umfasst, und der Schritt (103) des Vorhersagens an Bord des gegebenen Satelliten (200) durchgeführt wird, der die integrierte Schaltung (201) mitführt.

2. Verfahren (100) nach Anspruch 1, wobei der Algorithmus ein künstliches neuronales Netz nutzt.

3. Verfahren (100) nach Anspruch 2, wobei der Algorithmus ein Netz mit Langzeit- und Kurzzeitgedächtnis nutzt.

4. Verfahren (100) nach einem der vorstehenden Ansprüche, wobei die Programmiersprache Python oder C++ ist.

5. Verfahren (100) nach einem der vorstehenden Ansprüche, wobei die integrierte Schaltung (201) eine anwendungsspezifische integrierte Schaltung oder eine programmierbare integrierte Schaltung ist.

6. Verfahren (100) nach einem der vorstehenden Ansprüche, wobei die Hardwarebeschreibungssprache VHDL oder Verilog ist.

7. Verfahren (100) nach einem der vorstehenden Ansprüche, ferner umfassend einen Schritt (104) des Sendens der Vorhersage der Flugbahn (202) an eine Bodenstation.

8. Verfahren (300) für die Verwaltung von Weltraumkollisionen unter Beteiligung eines gegebenen Satelliten (200), umfassend die Schritte des Verfahrens (100) nach einem der vorstehenden Ansprüche und:
- einen Schritt (301) des Vorhersagens etwaiger zukünftiger Kollisionen unter Beteiligung des gegebenen Satelliten (200) aus der Vorhersage der Flugbahn (202);
- falls eine Kollision vorhergesehen wird, einen Schritt (302) des Berechnens einer Abweichungsvorgabe der Flugbahn für den gegebenen Satelliten (200) aus der Vorhersage der Flugbahn (202).

9. Computerprogrammprodukt, umfassend Anweisungen, die, wenn das Programm auf einem Computer ausgeführt wird, diesen veranlassen, die Schritte (101, 102) des Trainierens und Integrierens des Verfahrens (100, 300) nach einem der vorstehenden Ansprüche zu implementieren.

10. Satellit (200), auf dem eine Schaltung (201) mitgeführt wird, die einen Algorithmus für maschinelles Lernen integriert, der durch das Verfahren nach einem der Ansprüche 1 bis 8 trainiert ist, um die Flugbahn (202) des Satelliten (200) aus einem Datensatz in Bezug auf den Satelliten (200) vorherzusagen.

## Claims

1. Method (100) for predicting the trajectory (202) of a given satellite (200), comprising:
- a step (101) of training a machine learning algorithm on the basis of a dataset relating to the satellite (200) in order to make the algorithm capable of predicting the trajectory (202) of a satellite (200), the algorithm being coded in a programming language, the training being supervised and performed with the aid of a training database comprising:
○ a set of training datasets, each training dataset comprising at least one training data item relating to a training satellite (200), said training data item comprising satellite (200) position and speed data associated with an associated time, and
○ for each training dataset, a trajectory of the corresponding training satellite (200), said trajectory corresponding to the position data of the training satellite (200) at times following the time associated with the given training dataset, the training comprising an update of the parameters of the machine learning algorithm so as to minimize a difference between the trajectory (202) predicted by the machine learning algorithm on the basis of the training datasets and the corresponding training trajectory;
- a step (102) of integrating the trained algorithm, into an integrated circuit (201) intended to be carried on the given satellite (200), by converting the programming language into a hardware description language;
- a step (103) of predicting the trajectory (202) of the given satellite (200) by means of the integrated algorithm, on the basis of a dataset relating to the given satellite (200) comprising satellite (200) position and speed data at a time of the prediction or at a time prior to the time of the prediction, the predicted trajectory (202) comprising position data for a plurality of times following the time of prediction;
the training and integration steps (101, 102) being performed on the ground on a computer comprising at least one processor, and the prediction step (103) being performed on board the given satellite (200) carrying the integrated circuit (201).

2. Method (100) according to claim 1, wherein the algorithm uses an artificial neural network.

3. Method (100) according to claim 2, wherein the algorithm uses a long short-term memory network.

4. Method (100) according to any of the preceding claims, wherein the programming language is Python or C++.

5. Method (100) according to any of the preceding claims, wherein the integrated circuit (201) is an integrated circuit specific to an application or a programmable integrated circuit.

6. Method (100) according to any of the preceding claims, wherein the hardware description language is VHDL or Verilog.

7. Method (100) according to any of the preceding claims, further comprising a step (104) of sending the trajectory (202) prediction to a terrestrial station.

8. Method (300) for managing space collisions involving a given satellite (200), comprising the steps of the method (100) according to any of the preceding claims and:
- a step (301) of forecasting, on the basis of the trajectory (202) prediction, potential future collisions involving the given satellite (200);
- if a collision is foreseen, a step (302) of calculating, on the basis of the trajectory (202) prediction, a trajectory deviation instruction for the given satellite (200).

9. Computer program product comprising instructions which, when the program is executed on a computer, cause the computer to carry out the training and integration steps (101, 102) of the method (100, 300) according to any of the preceding claims.

10. Satellite (200) on which a circuit (201) is carried that integrates a machine learning algorithm trained by the method according to any of claims 1 to 8, for predicting the trajectory (202) of the satellite (200) on the basis of a dataset relating to the satellite (200).
